# EUROPEAN PATENT SPECIFICATION

(11) **EP 1 721 741 B1**
(45) Date of publication and mention of the grant of the patent: **22.10.2008**
(21) Application number: 05255533.1
(22) Date of filing: 09.09.2005
(51) Int. Cl.: B32B 37/06, B29C 65/24, F28F 5/02

(54) **Laminating machine and method for production thereof**
Laminiervorrichtung und Verfahren zu ihrer Herstellung
Appareil de lamination et méthode pour sa fabrication

(30) Priority: 10.05.2005 JP 2005164691
(43) Date of publication of application: 15.11.2006
(73) Proprietor: Fujipla Inc., Tokyo 104-0061 (JP)
(72) Inventor: Kiyono, Tadashi, Saitama 350-1155 (JP)
(74) Representative: Haley, Stephen

(56) References cited:
- EP-A- 0 794 054
- EP-A- 1 176 382

## Description

This invention relates to an improvement applicable to a laminating machine employable for production of a lamination having the shape of a card produced by heat-sealing a pile of one or more sheets of cut paper and one or more cover films made of plastic sheets, prevailingly employed as an ID card, an employee certificate or the like and to an improvement applicable to a method for production of the foregoing laminating machine. More specifically, this invention relates to an improvement applicable to a heating member employable for the foregoing laminating machine for the purpose to realize more efficient heat-sealing effects of the foregoing laminating machine and to a method for production of the foregoing improved laminating machine actually provided with the foregoing improved heating member.

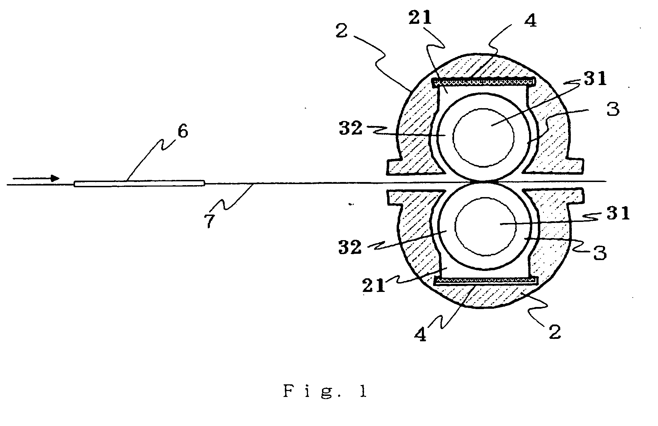

A laminating machine having a function to heat-seal a pile of one or more sheets of cut paper and one or more cover films made of plastic sheets to produce a lamination of one or more sheets of cut paper and one or more cover films made of plastic sheets, is available in the prior art. Referring to Fig. 1, an example of the foregoing laminating machine available in the prior art will be described below. A numeral (3) denotes a pair of elastic rolls made of a metal roll (31) sheathed by an elastic tube (32) made of an elastic material e.g. rubber or the like. A numeral (2) denotes a housing for a heating member (4) made of an aluminum molding or the like. The housing for a heating member (2) surrounds the elastic roll (3), leaving un-surrounded a direction wherein the roll (3) contacts the other one. A recess (21) extending in the direction parallel to the axis of the elastic roll (3) is provided along the internal surface of the housing for the heating member (2). The recess (21) receives the heating member (4). The heating member (4) employed in the prior art is for example a couple of mica plates holding an electric wire between them. A pile of one or more sheets of cut paper and one or more cover films made of plastic sheets (6) is fed from the left in the drawing along a pile transfer surface (7) in the direction of an arrow and paid off to the right after the films of the pile (6) are heated, pressed and adhered to one another by the pair of elastic rolls (3). Though Fig. 1 shows only one pair of elastic rolls (3), a combination of one elastic roll and one non-elastic roll is allowable. In addition, though Fig. 1 shows only a pair of heating rolls (3), addition of one or more pairs of non-heating rolls employable as feeder rolls, as advance heating rolls or pay-off rolls, is allowable.

EP-A-794054 discloses a laminating machine with one or two members, each of which is a combination of a facing-type or plate-type preheater.

The foregoing laminating machine is seldom employed in the continuous service mode, because a pile of non-continuous paper is employed as the starting material. In other words, the laminating machine is usually employed in the intermittent service mode, in response to a demand that occurs from time to time. When the laminating machine is required to start operation, the temperature of the heating rolls is still in the room temperature. Therefore, the heating rolls are required to be heated very quickly. Otherwise, a waiting time caused by initial heating of the heating rolls readily causes the laminating rate to become less.

Accordingly, the first object of this invention is to provide a laminating machine hardly incurring the foregoing drawbacks or a laminating machine of which the heating rolls can be quickly heated, upon requirement to start operation, resultantly improving the laminating rate of the laminating machine.

The second object of this invention is to provide a method for producing the foregoing improved laminating machine.

These objects are achieved by a laminating machine as defined in claim 1 and by a method as defined in claim 6.

As was described above, the object of this invention is to improve the heating effects of the foregoing laminating machine for the ultimate purpose to enable the laminating machine to heat-seal the pile of one or more sheets of cut paper and one or more cover films made of plastic sheets with a high rate. The teachings of physics classify the causes of heat transmission into three categories including conduction, convection and radiation. The inventor of this invention determined that it was unrealistic to use conduction and/or convection for the purpose to achieve the object of this invention. Therefore, he concentrated his efforts to improve the radiation effects. The easiest way to increase the radiation effects is to increase the strength of radiation source or the radiation area. Since the increase in the strength of radiation source is accompanied by an increase in cost, he selected an increase in the radiation area.

A flat heating member made of a couple of flat mica plates holding an electric wire between them is usually employed for the laminating machine available in the prior art. Since the recess made along the internal surface of a housing for a heating member has a carved shape, however, it is difficult to hold a large sized flat heating member. This is the reason why it was difficult to increase the radiation area of the heating member.

Combining all the foregoing parameters, the inventor of this invention brought out an inventive concept that replacement of the flat heating member provided with an electric wire imbedded in flat mica plates towards a heating member provided with an electric wire imbedded in insulator plates e.g. one or more mica plates or the like, which insulator plates are given plural grooves parallel to each other produced by employing a set of rolls one of which has plural linear projections produced in the direction parallel to the axis of the roll and the other of which does not have any projection but is flat, resultantly the insulator plates can be bent at each groove or are practically elastic, would doubtless solve the foregoing problem, resultantly enabling the improved heating member to be readily installed in a curved or cylindrical recess made along the internal surface of the cylindrical housing for the heating member of a laminating machine. This invention was finished by reduction of this inventive concept to practice.

The structure of the insulator plate employed for the improved heating member may be defined in a different language reading a plurality of rectangular plates of which the longer sides are connected with the longer sides of the neighboring rectangular plates in a manner that each rectangular plate is allowed to bent in respect to the neighboring rectangular plate, resultantly making the single large rectangular plate to be allowed to bend along the longer sides of each small rectangular plate.

The foregoing structure of the improved heating member is named "a multiple-surface-structure" in this specification.

The technical concept of this invention can be restated as follows.

A laminating machine of this invention is provided with at least one pair of rolls placed in a route along which a pile of one or more sheets of cut paper and one or more cover films made of plastic sheet is fed to be heated and pressed and to cause the films to be adhered to each other, in a gap between the rolls, resultantly converting the pile to a lamination of one or more sheets of cut paper and one or more cover films made of plastic sheets, at least one of the rolls being an elastic roll, the elastic roll being surrounded by a housing for a heating member, leaving un-surrounded a direction in which the rolls contact each other, the housing having a rectangular recess facing the roll, the both ends of the sides having projections extending along the axis of the roll, the projections having a function to clamp the heating member in the recess, wherein the heating member has a shape corresponding to the surface of the elastic roll, and the heating member has a curved shape corresponding to the surface of the recess, and the heating member faces at least 40% of the surface of the elastic roll.

The pair of elastic rolls is allowed to be a combination of rolls of which the surfaces are covered by elastic tubes or a structure of elastically suspended non-elastic rolls.

The heating member can be of a multiple-surface-structure defined in this specification. In other words, the heating member can be a plate given plural grooves parallel to the axis of the elastic roll.

The heating member can be bent at each groove.

A result of an experiment proves a thickness range of 0.1~0.3 mm is most appropriate for the foregoing improved heating member.

A method for production of the foregoing improved laminating machine is provided with a step to produce a heating member having an electric wire embedded in an insulator plate given plural grooves parallel to the axis of a heating roll by employing a set of rolls one of which has plural linear projections produced in the direction parallel to the axis of the roll and the other of which does not have any projection, and a step for installing the heating member made of the insulator plate in the recess produced along the internal surface of the housing for heating member to allow the heating member to face at least 40% of the entire surface of the heating roll.

The advantageous function of the laminating machine of this invention is based on the foregoing heating member made of an insulator plate given plural grooves parallel to the axis of the heating roll. Since the insulator plates can be bent at each groove, it functions as if it is an elastic curved plate, so that it is allowed to be readily installed in a cylindrical recess made on the internal surface of the housing for the heating member.

Since the heating member faces at least 40% of the entire surface of the heating roll, the radiation area is considerably increased and the heating effects are considerably improved, resultantly allowing the heating rolls to be heated quickly.
Fig. 1 is an axial cross-sectional view of a laminating machine available in the prior art.
Fig. 2 is an axial cross-sectional view of a laminating machine in accordance with an embodiment of this invention, and
Fig. 3 is a perspective view of a heating member in accordance with an embodiment of this invention.

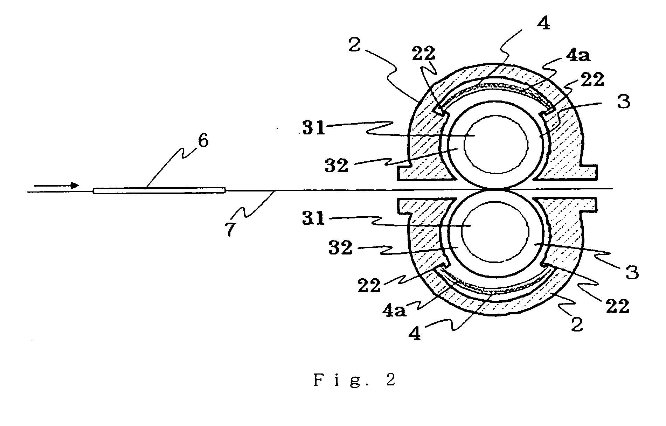

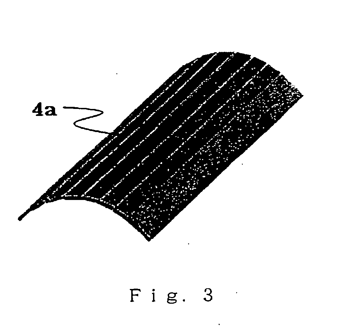

Referring to Figs. 2 and 3 respectively illustrating an axial cross-section of an embodiment of this invention and a perspective view of a heating member employed for the embodiment of this invention, a numeral (3) denotes a pair of elastic rolls made of a metal cylinder (31) sheathed by a rubber cylinder (32). A numeral (2) denotes a housing for a heating member made of an aluminum mold or the like surrounding the elastic rolls (3). A recess (21) having a cylindrical surface is made along the internal surface of the housing for a heating member (2) to face at least 40% of the entire surface of the elastic heating roll (3). In the recess (21), a heating member (4a) having a "multiple-surface-structure" or made of an insulator plates given plural grooves parallel to the axis of the roll as shown in Figs. 3, is installed. The recess (21) is provided with a projection (22) at each side thereof for the purpose to clutch the heating member (4a).

For the purpose to conduct a heat-sealing process, a pile of one or more sheets of cut paper and one or more cover films made of plastic sheets (6) is fed along a pile transfer surface (7) in the direction of an arrow and paid off to the right after being heat-sealed between a pair of the elastic rolls (3).

A combination of the elastic rolls (3) and the housing (2) for the elastic rolls is allowed to be limited to either upper one alone or lower one alone. In other words, the remaining one is allowed to be a combination of non-elastic roll and the housing for it.

Though Fig. 2 does not show, additional employment of one or more non-heating rolls e.g. pull-in rolls for feeding a starting material pile, a previous heating roll or a pay-off roll for discharging product lamination, is allowable.

Fig. 3 illustrates a perspective view of a heating member (4a) in accordance with the embodiment of this invention or a heating member (4a) of the "multiple-surface-structure" or an insulator plate given plural grooves parallel to each other. As was described earlier, the insulator plate is allowed to bent at each groove, resultantly it acts as a curved plate corresponding to the curved surface of the elastic roll.

As was described above, the heating member (4a) made of the insulator plate given plural grooves parallel to each other functions as if it is a flexible plate. As a result, the heating member (4a) is allowed to cover at least 40% of the entire surface of the elastic roll (3), resultantly increasing the radiation area for the heating member (4a).

### EXAMPLE

Plural mica plates respectively having the thickness of 0.05mm, 0.10mm, 0.20mm, 0.30mm and 0.040mm were selected. Each of them was passed between a pair of rolls including a roll having a plane surface and a roll having a surface on which plural projections extending in the direction parallel to the axis thereof are made. By this step, plural grooves parallel to each other were made on the surface of the mica plate. Approximately 2mm was selected for the distance between each groove.

An electric wire was wound around the mica plate. Other mica plates having grooves cover the both surfaces of the foregoing mica plate having grooves, just for protection of the electric wire. An attention is required to pile three mica plates to align the grooves.

Employing the foregoing steps, 5 examples having thickness different from one another were prepared.

Three independent tests including (1) how easy it was possible to apply winding of an electric wire to the mica plate, (2) how easy it was possible to bend the heating member along the groove, during the period in which it is installed in the recess of the housing for heating member, and (3) how long time was required to rise the temperature of the surface of the elastic roll to an appropriate temperature, after each heating member is installed in a laminating machine. Results of the test are shown in a following table.

Based on the results of the test, mica plates having thickness range of 0.10mm~0.30mm are determined to be most appropriate.

**TABLE**

| Mica plate Thickness | Winding of heating wire | Quality of Curve | Time required to reach 100°C | Decision |
|---|---|---|---|---|
| 0.05mm | Bad | Un-elastic & ugly | 1.7min | Bad |
| 0.1mm | Medium | Beautiful curve | 1.8min | Medium |
| 0.2mm | Good | Beautiful curve | 2.0min | Good |
| 0.3mm | Good | Beautiful curve | 2.4min | Good |
| 0.4mm | Good | Beautiful curve | 3.0min | Bad |

The above description has clarified that this invention has successfully provided a laminating machine, wherein the heating effects of the heating members are improved and the heating rate of the laminating machine is considerably improved.

## Claims

1. A laminating machine comprising:
at least one pair of rolls (3) placed in a route along which a pile of one or more sheets of cut paper and one or more cover films (6) made of plastic sheet is fed to be heated, pressed and to cause said pile to be adhered, in a gap between said rolls to be converted to a lamination of one or more sheets of cut paper and one or more cover films made of plastic sheets, at least one of said rolls being an elastic roll, said elastic roll being surrounded by a housing (2) for a heating member (4a) leaving un-surrounded the direction in which the rolls contact each other, said housing having a recess (21) facing said roll, the both ends of said recess having projections (22) extending along the axis of said roll, and said recess retaining said heating member clamped by said projections, **characterised in that:** the recess of said housing for said heating member has a shape corresponding to the surface of said elastic roll, and said heating member is made of a combination of insulator plates and an electric wire and has a curved shape corresponding to the surface of said recess and faces at least 40% of the surface of said elastic roll.

2. A laminating machine in accordance with claim 1, wherein said one pair of rolls (3) is selected from a group containing pairs of rolls each of which is surrounded by an elastic cylinder and pairs of non-elastic rolls elastically suspended.

3. A laminating machine in accordance with claim 1 or 2, wherein said heating member (4a) has a multiple-surface-structure.

4. A laminating machine in accordance with claim 1, 2 or 3, wherein said heating member (4a) can be elastically bent.

5. A laminating machine in accordance with claim 1, 2, 3, or 4, wherein said heating member (4a) is a combination of an insulator plate having grooves and thickness of 0.1-0.3mm, an electric wire and insulator plate having grooves.

6. A method for production of a laminating machine according to any preceding claim, the method comprising:
a step to produce a heating member having an electric wire embedded in insulator plates, the insulator plates given plural grooves parallel to the axis of said heating roll by employing a set of rolls one of which has plural linear projections produced in the direction parallel to the axis of the roll and the other of which does not have any projection, so that the insulator plates can be bent at each groove, and
a step for installing said heating member having a curved shape in said recess produced along the internal surface of the housing for heating member to allow said heating member to face at least 40% of the entire surface of said heating roll.

## Patentansprüche

1. Laminiermaschine, enthaltend:
wenigstens zwei Walzen (3), die in einer Strecke angeordnet sind, entlang derer ein Stapel aus einem oder mehreren Blättern geschnittenen Papiers sowie einer oder mehreren Abdeckfolien (6), die aus einem Kunststoffblatt bestehen, zugeführt wird, um in einem Spalt zwischen den Walzen erwärmt und gepresst zu werden, um zu bewirken, dass der Stapel aneinander haftet, um zu einem Laminat aus einem oder mehreren Blättern geschnittenen Papiers und einer oder mehreren Abdeckfolien, die aus Kunststoffblättern bestehen, umgewandelt zu werden, wobei wenigstens eine der Walzen eine elastische Walze ist, die elastische Walze von einem Gehäuse (2) für ein Heizelement (4a) umgeben ist, bei dem die Richtung unumgeben bleibt, in der sich die beiden Walzen berühren, wobei das Gehäuse eine Aussparung (21) aufweist, die der Walze zugewandt ist, die beiden Enden der Aussparung Vorsprünge (22) haben, die sich entlang der Achse der Walze erstrecken, und in der Aussparung das Heizelement gehalten ist, das durch die Vorsprünge festgeklemmt ist, **dadurch gekennzeichnet, dass:** die Aussparung des Gehäuses für das Heizelement eine Form hat, die mit der Oberfläche der elastischen Walze korrespondiert, und das Heizelement aus einer Kombination von Isolierplatten sowie einem elektrischen Draht besteht und eine gekrümmte Form hat, die der Oberfläche der Aussparung entspricht und etwa 40% der Oberfläche der elastischen Walze zugewandt ist.

2. Laminiermaschine nach Anspruch 1, bei der die beiden Walzen (3) aus einer Gruppe gewählt sind, die Walzenpaare, die jeweils von einem elastischen Zylinder umgeben sind, und Paare nicht elastischer Walzen enthalten, die elastisch gelagert sind.

3. Laminiermaschine nach Anspruch 1 oder 2, bei der das Heizelement (4a) einen Mehrfachoberflächen-Aufbau hat.

4. Laminiermaschine nach Anspruch 1, 2 oder 3, bei der das Heizelement (4a) elastisch gebogen werden kann.

5. Laminiermaschine nach Anspruch 1, 2, 3 oder 4, bei der das Heizelement (4a) eine Kombination aus einer Isolatorplatte, die Rillen und eine Dicke von 0,1 bis 0,3 mm hat, einem elektrischen Draht und einer Isolierplatte mit Rillen ist.

6. Verfahren zum Herstellen einer Laminiermaschine gemäß einem der vorhergehenden Ansprüche, wobei das Verfahren umfasst:
einen Schritt zum Herstellen eines Heizelementes, das einen elektrischen Draht hat, der in die Isolatorplatten eingebettet ist, wobei in den Isolatorplatten mehrere Rillen parallel zur Achse der Heizwalze ausgebildet werden, in dem ein Satz von Walzen verwendet wird, von denen eine mehrere lineare Vorsprünge hat, die in einer Richtung parallel zur Achse der Walze hergestellt sind, und die andere keine Vorsprünge aufweist, so dass die Isolierplatten an jeder Rille gebogen werden können, und
einen Schritt zum Installieren des Heizelementes, das eine gekrümmte Form hat, in der Aussparung, die entlang der Innenfläche des Gehäuses ausgebildet ist, um es dem Heizelement zu gestatten, wenigstens 40% der Gesamtfläche der Heizwalze zugewandt zu sein.

## Revendications

1. Machine à stratifier comprenant :
au moins deux cylindres (3) placés sur un parcours sur lequel une pile constituée d'une ou plusieurs feuilles de papier coupé et d'un ou plusieurs films (6) de recouvrement constitués d'une feuille de matière plastique est placée pour être chauffée et pressée, ladite pile étant amenée à adhérer dans l'interstice entre lesdits cylindres pour être convertie en une structure stratifiée constituée d'au moins une feuille de papier coupé et d'au moins un film de recouvrement constitué d'une feuille de matière plastique, au moins l'un desdits cylindres étant un cylindre élastique, ledit cylindre élastique étant entouré par le logement (2) d'un élément chauffant (4a) ce logement n'entourant pas la direction dans laquelle les cylindres sont en contact mutuel, ledit logement présentant un creux (21) qui fait face audit cylindre, les deux extrémités dudit creux présentant des saillies (22) qui s'étendent le long de l'axe dudit cylindre et ledit creux retenant ledit élément chauffant fixé à l'aide desdites saillies,
**caractérisée en ce que :**
la forme du creux dudit logement dudit élément chauffant correspond à la surface dudit cylindre élastique, ledit élément chauffant étant constitué d'une combinaison de plaques isolantes et d'un câble électrique et présentant une forme incurvée qui correspond à la surface dudit creux, l'élément chauffant faisant face à au moins 40 % de la surface dudit cylindre élastique.

2. Machine à stratifier selon la revendication 1, dans laquelle lesdits deux cylindres (3) sont sélectionnés dans l'ensemble constitué de paires de cylindres qui sont tous deux entourés par un cylindre élastique et de paires de cylindres non élastiques suspendus élastiquement.

3. Machine à stratifier selon les revendications 1 ou 2, dans laquelle ledit élément chauffant (4a) présente une structure à plusieurs surfaces.

4. Machine à stratifier selon l'une des revendications 1, 2 ou 3, dans laquelle ledit élément chauffant (4a) peut être cintré élastiquement.

5. Machine à stratifier selon l'une des revendications 1, 2, 3 ou 4, dans laquelle ledit élément chauffant (4a) est constitué d'une combinaison d'une plaque isolante qui présente des rainures et dont l'épaisseur est comprise entre 0,1 et 0,3 mm, d'un câble électrique et d'une plaque isolante qui présente des rainures.

6. Procédé de fabrication d'une machine à stratifier selon l'une quelconque des revendications précédentes, le procédé comprenant :
une étape qui consiste à fabriquer un élément chauffant qui présente un câble électrique incorporé dans des plaques isolantes, les plaques isolantes étant pourvues de plusieurs rainures parallèles à l'axe dudit cylindre chauffant en utilisant un ensemble de cylindres dont l'un présente plusieurs saillies linéaires ménagées dans la direction parallèle à l'axe du cylindre, les autres cylindres ne présentant aucune saillie, de telle sorte que les plaques isolantes puissent être cintrées sur chaque rainure, et
une étape qui consiste à installer ledit élément chauffant qui présente une forme incurvée dans ledit creux ménagé sur la surface interne du logement chauffant pour permettre audit élément chauffant de faire face au moins à 40 % de la totalité de la surface dudit cylindre chauffant.
